# EUROPEAN PATENT APPLICATION

(11) **EP 4 460 097 A1**
(43) Date of publication of application: **06.11.2024**
(21) Application number: 23171128.4
(22) Date of filing: 02.05.2023
(51) Int. Cl.: H04W 48/12

(54) **COMPUTER-IMPLEMENTED METHOD, COMPUTER PROGRAM PRODUCT AND COMMUNICATION SYSTEM FOR DATA TRANSMISSION**

(71) Applicant: Siemens Aktiengesellschaft, 80333 München (DE)
(72) Inventor: Schneider, Ben, 85748 Garching (DE); Bahr, Michael, 81827 München (DE); Richerzhagen, Björn, 85055 Ingolstadt (DE)
(74) Representative: Siemens Patent Attorneys

(57) **Abstract**

A computer-implemented method for data transmission in a communication system including an access point device and a station device is proposed. The method comprising:
a) receiving a type of access point message, the type of access point message including a specific flag set by the access point device to a first state or to a second state and indicating a wireless standard of the access point device,
b) verifying whether the wireless standard of the station device is higher or equal than the wireless standard of the access point device in dependence on the type of access point message for obtaining a verification result, and
c) if the verification result is negative and the specific flag is set to the second state, discontinuing, an execution of an action in connection with the access point device.

## Description

The present invention relates to a computer-implemented method and to a computer program product for data transmission in a communication system including an access point device and a station device. Further, the present invention refers to a communication system for data transmission including the access point device and the station device.

Conventionally, channel access mechanisms in wireless communication networks operate based on a distributed mechanisms such as Distributed Coordination Function and Enhanced Distributed Channel Access (EDCA) in a listen-before-talk mode. EDCA is the default mechanism that is optimized for high throughput but not for bounded transmission delays.

Industrial applications require deterministic and real-time capable communication with guaranteed channel access. Further, industrial solutions are usually based on polling-based or Time Division Multiple Access-based mechanisms with high implementation complexity which are typically not Institute of Electrical and Electronics Engineers (IEEE) 802.11 compliant.

With the current Wi-Fi developments, for example, the Wi-Fi 6 standard (that is IEEE 802.11ax), the access point device is in charge of initiating transmissions using IEEE 802.11ax compliant Trigger Frames. That means, that in both directions (Downlink (DL) and Uplink (UL)) the access point device has to win a Transmission Opportunity (TXOP).

However, the existing Wi-Fi 6 standard is backwards compatible and allows legacy devices to contend for channel access in a distributed fashion in order to support lower versions of the IEEE 802.11 standard, for example, the Wi-Fi 5 standard.

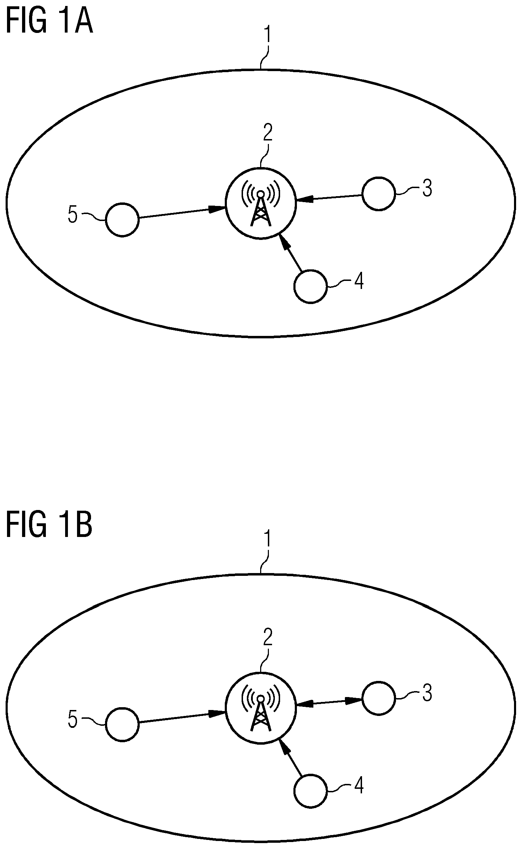

Nevertheless, in mixed networks with Wi-Fi 6 station devices and station devices that only support Wi-Fi 5 or earlier (i.e., the usual scenarios) as shown in Fig. 1B, the legacy station devices would still try to contend for TXOPs and thus compete with the access point device trying to initiate a transmission. When a station device wins the TXOP against the access point device, it can start its transmission and block the channel for that amount of time. But this causes high delays for channel access in these mixed networks.

It is one object of the present invention to improve the channel access in a communication system.

According to a first aspect, a computer-implemented method for data transmission in a communication system, in particular a wireless local area network, including an access point device and a station device, is proposed. The method comprising:
a) receiving, by the station device, a type of access point message transmitted from the access point device, the type of access point message including a specific flag set by the access point device to a first state or to a second state and indicating a wireless standard of the access point device,
   wherein the first state indicates that a station device with a wireless standard which is lower than the wireless standard of the access point device is allowed to connect to the access point device,
   wherein the second state indicates that a station device with a wireless standard which is higher or equal than a wireless standard of the access point device is allowed to connect to the access point device, and the second state indicates further that a station device with a wireless standard which is lower than the wireless standard of the access point device is allowed to establish a limited connection to the access point device or is prohibited to connect to the access point device,
b) verifying, by the station device, whether the wireless standard of the station device is higher or equal than the wireless standard of the access point device in dependence on the type of access point message for obtaining a verification result, and
c) if the verification result is negative and the specific flag is set to the second state, discontinuing, by the station device, an execution of an action in connection with the access point device.

Using the present computer-implemented method, the channel access in a communication system is improved since non-Wi-Fi 6 station devices are forbidden in the communication system such that the access point device can access the channel and initiate Orthogonal Frequency-Division Multiple Access (OFDMA) transmissions.

With the computer-implemented method according to the first aspect, it is possible to forbid non-Wi-Fi 6 station devices in the communication system. This leads to the technical effect that, in both directions, DL and UL, the access point device has to contend with the station devices for winning a TXOP but the access point device always wins the TXOP since no Wi-Fi 5 station devices or a lower standard station devices are present in the communication system which contend with the access point device for the TXOP and the Wi-Fi 6 wireless standard or higher standard station devices, present in the communication system, do not want to contend with the access point device for winning a TXOP. In other words: in communication systems, which only contain Wi-Fi 6 station devices, and thus using OFDMA and trigger-based transmissions, the access point device is always in control of initiating OFDMA transmissions in UL and DL directions. Thus, the access point device always wins the TXOP as the (Wi-Fi 6 or higher standard) station devices do not try to access the channel by themselves but wait until they are triggered for a transmission by the access point device.

This results in the advantage of reduced channel access delays for OFDMA-based transmissions in DL and UL directions.

Further, this has the advantage that the proposed solution according to the computer-implemented method according to the first aspect is an IEEE 802.11 standard-compliant solution to disable legacy Wi-Fi devices (Wi-Fi 5 or a lower standard) that have negative performance impact on latency-sensitive data transmissions.

In addition, the proposed computer-implemented method according to the first aspect is easy to implement in existing Wi-Fi communication systems by only adding one bit of information to a respective management frame.

In particular, by transmitting the set specific flag to the station device, the station device obtains knowledge about the wireless standard of the access point device. Further, the station device obtains knowledge of a backwards compatibility of Wi-Fi standards the access point device allows.

Preferably, the set specific flag has a size of 1 bit. In particular, in the first state, the flag is set to 1 and in the second state, the flag is set to 0.

A computer-implemented method is a method which involves the use of a computer, a computer network or other programmable apparatus, where one or more features are realized wholly or partly by means of a computer program.
Preferably, a wireless local area network (WLAN) refers to a local radio network, usually meaning a standard of the IEEE 802.11 family. In particular, WLAN refers to the radio network, while Wi-Fi refers to certification by the Wi-Fi Alliance based on the IEEE 802.11 standard.

In particular, an access point device can be formed as a router. It can include hardware and/or software parts. Hardware parts can include electronic and/or optical components such as a processor, electric wires, optical wires, a storage and/or a memory, at least a circuit board on which the electronic and/or optical components are implemented, and/or parts of a computer system. Software parts can include a function, a routine, a program code and/or an executable object.

The station device, the second station device and/or the third station device can be formed as a terminal device, as an end-device or as an endpoint. It can be implemented as a mobile station device or a stationary station device. A station device can be any device that can be connected to a network such as a wireless local area network, for example, a computer, a laptop, a smartphone, a tablet or a server. The station device can include hardware and/or software parts.

Preferably, the wireless standard of the station device is the wireless standard which the station device supports or a higher version of this wireless standard.

In particular, the term "allowed to connect" if the specific flag is set to the first state means that the access point device allows the station device to contend for channel access (in order to probably win a TXOP) by using a distributed channel access method, for example, Carrier Sense Multiple Access/Collision Avoidance (CSMA/CA), and/or to transmit messages to the access point device.

Further, preferably, the term "allowed to connect" if the specific flag to is set to the second state means that the access point device allows the station device to transmit messages to the access point device for establishing a data transmission or data connection for transmitting messages between the access point device and the station device.

Specifically, the limited connection is a data connection with limited communication rights for the station device. In particular, this means that the station device obtains control commands by the access point device when the station device is only allowed to transmit signals to the access point device.

In particular, the term "prohibited to connect" means that the access point device does not allow the station device to contend for channel access by using a distributed channel access method and/or to transmit messages to the access point device.

Preferably, the term "discontinuing" means that the station device immediately terminates, cancels or stops any execution of the action in connection with the access point device in order to not transmit any messages to the access point device and to not disturb the operation of the access point device.

After the verification result of step b) is obtained, the station device has information indicating which wireless standards the access point device supports. In other words, by the verifying according to step b), it is determined whether the station device supports OFDMA. In particular, a station device supports OFDMA if the wireless standard of the station device is IEEE 802.11ax or a higher standard or a higher version of the IEEE 802.11ax wireless standard (see [1], Annex B.4.33.1 HE MAC features, Protocol capability: "Trigger frame"). The same applies also for the further verification result.

According to an embodiment, the wireless standard of the access point device is IEEE 802.11ax or a higher version of the IEEE 802.11 wireless standard.

The wireless standard IEEE 802.11ax can be referred to as Wi-Fi 6. Further, the wireless standard of the access point device can also be IEEE 802.11be, IEEE 802.11bn or a higher standard. Also, the wireless standard of the access point device can be a higher version of the wireless standard IEEE 802.11be or IEEE 802.11bn.

According to a further embodiment, the wireless standard of the station device is IEEE 802.11n or a lower standard, IEEE 802.11ac, IEEE 802.11ax, IEEE 802.11be, IEEE 802.11bn or a higher standard.

The wireless standard IEEE 802.11n can be referred to as Wi-Fi 4, the wireless standard IEEE 802.11ac can be referred to as Wi-Fi 5, the wireless standard IEEE 802.11be can be referred to as Wi-Fi 7 and the wireless standard IEEE 802.11bn can be referred to as Wi-Fi 8. Also, the wireless standard of the station device can be a higher version of the wireless standard IEEE 802.11n, IEEE 802.11ac, IEEE 802.11ax, IEEE 802.11be or IEEE 802.11bn.

According to a further embodiment, the type of access point message is a management frame including the set specific flag.

According to a further embodiment, step a) further includes, prior to the receiving, the steps:
setting, by the access point device, the specific flag to the first state or to the second state, and
transmitting, by the access point device, by means of an access point message of a first type, the set specific flag to the station device, wherein the access point message of a first type is a first management frame formed as a beacon frame.

The respective management frame, for example, the management frame, the first, the second, the third and/or the fourth management frame includes the set specific flag.

In particular, the Beacon frame is one of the management frames in IEEE 802.11 based WLANs. Preferably, the beacon frame is periodically transmitted, for example, each 100 milliseconds (ms) by the access point device.

According to a further embodiment, the beacon frame includes header fields, in particular HE MAC Capabilities Information fields, wherein the specific flag set to the first state or to the second state is inserted into a specific field of the HE MAC Capabilities Information fields.

Further, the header fields of the beacon frame can also include EHT MAC Capabilities Information fields or Capabilities Information fields, in which the set specific flag is inserted.

Preferably, the beacon frame is an IEEE 802.11ax compliant Beacon frame format. In particular, the specific field of the HE MAC Capabilities Information fields is the bit B24 of the HE MAC Capabilities Information field format of Figure 9-788b of the IEEE 802.11ax-2021 standard [1]. Thus, specifically, the specific field of the HE MAC Capabilities Information fields is modified in that manner that now it includes the set specific flag which can be named as "OFDMA Backwards Compatibility Support field" with a concrete description.

The concrete description can include a first column "subfield" for the description of the bit B24, a second column "definition" for the definition of the bit B24 and a third column "encoding" indicating a description of the first state and the second state of the specific flag according to the columns based on Table 9-322a in IEEE 802.11ax-2021 standard [1] .

For example, the first column includes the name of the specific field, namely "OFDMA Backwards Compatibility Support field" of the access point device.

Specifically, the second column includes the definition of the bit B24, namely OFDMA Backwards Compatibility of the access point device.

Moreover, the third column can include "Set the specific flag to 0 if the access point device does not allow the station devices in the communication system to contend for channel access using a distributed channel access method and/or does only allow the limited connection to the access point device".

Further, the third column can include "Set the specific flag to 1 if the access point device allows the station devices in the communication system to contend for channel access using a distributed channel access method".

A distributed channel access method can further include Orthogonal Frequency-Division Multiplexing (OFDM).

According to a further embodiment, step a) further includes, prior to the receiving, the steps:
transmitting, by the station device, a probe request to the access point device,
setting, by the access point device, the specific flag to the first state or to the second state, and
transmitting, by the access point device, in response to the received probe request, a probe response to the station device, wherein the probe response is an access point message of a second type formed as a second management frame.

A probe request and a probe response are one of the management frames in IEEE 802.11 based WLANs, respectively. Preferably, a probe request is not encrypted since it includes no user data. For example, the probe request is used for network discovery of the station device in a communication system managed by the access point device.

According to a further embodiment, the second management frame includes header fields, in particular EHT MAC Capabilities Information fields, wherein the specific flag set to the first state or to the second state is inserted into a specific field of the EHT MAC Capabilities Information fields.

Preferably, the EHT MAC Capabilities Information fields are Information fields defined in the IEEE 802.11be or Wi-Fi 7 standard.

Further, the header fields of the second management frame can also include HE MAC Capabilities Information fields or Capabilities Information fields, in which the set specific flag is inserted.

According to a further embodiment, step a) further includes, prior to the receiving, the steps:
transmitting, by the station device, an authentication request to the access point device,
setting, by the access point device, the specific flag to the first state or to the second state, and
transmitting, by the access point device, in response to the received authentication request, an authentication response to the station device, wherein the authentication response is an access point message of a third type formed as a third management frame.

Preferably, an authentication request and an authentication response are one of the management frames in IEEE 802.11 based WLANs, respectively.

According to a further embodiment, the third management frame includes header fields, in particular Capabilities Information fields, wherein the specific flag set to the first state or to the second state is inserted into a specific field of the Capabilities Information fields.

Further, the header fields of the third management frame can also include HE MAC Capabilities Information fields or EHT MAC Capabilities Information fields, in which the set specific flag is inserted.

According to a further embodiment, step a) further includes, prior to the receiving, the steps:
transmitting, by the station device, an association request to the access point device,
setting, by the access point device, the specific flag to the first state or to the second state, and
transmitting, by the access point device, in response to the received association request, an association response to the station device, wherein the association response is an access point message of a fourth type formed as a fourth management frame.

Preferably, an association request and an association response are one of the management frames in IEEE 802.11 based WLANs, respectively.

According to a further embodiment, the fourth management frame includes header fields, in particular Capabilities Information fields, wherein the specific flag set to the first state or to the second state is inserted into a specific field of the Capabilities Information fields.

Further, the header fields of the fourth management frame can also include HE MAC Capabilities Information fields or EHT MAC Capabilities Information fields, in which the set specific flag is inserted.

According to a further embodiment, the specific flag set by the access point device is stored in a vendor specific information element of a storage unit of the access point device, wherein the method further includes:
transmitting, by the access point device, the vendor specific information element as a part of a header field of the beacon frame, the probe response, the authentication response and/or the association response to the station device.

Preferably, a vendor specific information element is an element specific for a vendor of the access point device which includes access point device specific information.

In particular, the storage unit is formed as a non-volatile storage or as a part of a storage system, the access point device is connected and has access to.

Preferably, the specific flag set by the access point device is stored in the storage unit of the access point device. Specifically, at least one management frame, for example, the management frame, the first, the second, the third and/or the fourth management frame, is stored in the storage unit of the access point device.

According to a further embodiment, the communication system includes a second station device and a third station device, wherein data frames transmitted between the station device, the second station device and/or the third station device and the access point device are controlled by using Orthogonal Frequency-Division Multiple Access.

Preferably, by using Orthogonal Frequency-Division Multiple Access (OFDMA), it is determined which station device is allowed to transmit which amount of data (for example, data frames) to whom at which time.

In particular, if the specific flag is set to 0 (second state), it is ensured that only station devices which support the Wi-Fi 6 (802.11ax) wireless standard are allowed to transmit messages in the communication system to the access point device. Specifically, by using OFDMA in the Wi-Fi 6 communication system, this leads to the technical effect that it is further ensured that the access point device always wins the TXOP and the access point device is the central instance in the communication system for triggering communication with the station devices. Due to that only OFDMA is used as a channel access and communication scheme, no station device is allowed to disturb the communication of the access point device. In addition, also, station devices with the limited connection cannot interfere the access point device since they are only allowed by the access point device to transmit messages in UL or DL direction. In sum, this reduces channel access delays and disables the negative performance impact of station devices which are not supporting Wi-Fi 6 or higher.

In particular, data frames are one type of frames used in IEEE 802.11 based WLANs and are used to transfer information or trigger an event or action.

According to a further embodiment, step c) further includes the step:
if the verification result is positive and the specific flag is set to the second state, continuing, by the station device, the execution of the action, wherein the execution of the action includes establishing a data connection between the station device and the access point device.

According to a further embodiment, step c) further includes the step:
if the verification result is negative and the specific flag is set to the first state, continuing, by the station device, the execution of the action.

In particular, the execution of the action can include transmitting, by the station device, a station message to the access point device.

According to a further embodiment, the method further comprising the steps:
receiving, by the access point device, a station message transmitted from the station device, the station message including station information indicating the wireless standard of the station device,
verifying, by the access point device, whether the wireless standard of the station device is higher or equal than the wireless standard of the access point device in dependence on the station information for obtaining a further verification result, and
if the further verification result is negative and the specific flag is set to the second state, allowing, by the access point device, the execution of a limited action, wherein the execution of the limited action includes establishing a limited connection to the access point device by the station device, or prohibiting, by the access point device, the execution of the action.

After the further verification result is obtained, the access point device has information indicating which wireless standard the station device has.

Preferably, a station message is formed as a probe request, as an authentication request, as an association request or any other message which includes the wireless standard of the station device.

Any embodiment of the first aspect may be combined with any embodiment of the first aspect to obtain another embodiment of the first aspect.

According to a second aspect, a computer program product is proposed which comprises a program code for executing the above-described computer-implemented method according to the first aspect or an embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a communication system, in particular a wireless local area network, including an access point device and a station device is proposed. The station device is configured to:
receive a type of access point message transmitted from the access point device, the type of access point message including a specific flag set by the access point device to a first state or to a second state and indicating a wireless standard of the access point device,
wherein the first state indicates that a station device with a wireless standard which is lower than the wireless standard of the access point device is allowed to connect to the access point device,
wherein the second state indicates that a station device with a wireless standard which is higher or equal than a wireless standard of the access point device is allowed to connect to the access point device, and the second state indicates further that a station device with a wireless standard which is lower than the wireless standard of the access point device is allowed to establish a limited connection to the access point device or is prohibited to connect to the access point device, and
verify whether the wireless standard of the station device is higher or equal than the wireless standard of the access point device in dependence on the type of access point message for obtaining a verification result, and
if the verification result is negative and the specific flag is set to the second state, the station device is configured to discontinue an execution of an action in connection with the access point device.

The technical effects and advantages described for the computer-implemented method according to the first aspect apply equally to the communication system according to the third aspect.

Further, embodiments and features described with reference to the computer-implemented method according to the first aspect apply mutatis mutandis to the communication system according to the third aspect.

According to an embodiment of the third aspect, the wireless standard of the access point device is IEEE 802.11ax or a higher version of the IEEE 802.11 wireless standard and the wireless standard of the station device is IEEE 802.11n or a lower standard, IEEE 802.11ac, IEEE 802.11ax, IEEE 802.11be, IEEE 802.11bn or a higher standard.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Fig. 1A: shows a schematic block diagram of a communication system of the prior art;
- Fig. 1B: shows a schematic block diagram of a further communication system of the prior art;
- Fig. 1C: shows a schematic block diagram of a communication system for data transmission according to an embodiment; and
- Fig. 2: shows a schematic flowchart of a computer-implemented method for data transmission according to an embodiment.

In the Figures, like reference numerals designate like or functionally equivalent elements, unless otherwise indicated.

Fig. 1A shows a schematic block diagram of a communication system 1 of the prior art. It includes an access point device 2, a station device 3, a second station device 4 and a third station device 5.

The communication system 1 of Fig. 1A shows an approach, in which the station devices 3, 4, 5 only support Wi-Fi 5 (IEEE 802.11ac) and before, whose communication is based on a listen-before-talk (or CSMA/CA) strategy. For a data transmission, the station devices 3, 4, 5 can individually contend for the channel access in order to win a TXOP. If the station devices 3, 4, 5 find the medium to be idle for a specific amount of time, they start their transmission using the complete sub-channel they are assigned to that has been sensed idle. This sub-channel is then blocked for data transmission which is initiated by the access point device 2.

Fig. 1B shows a schematic block diagram of a further communication system 1 of the prior art. It also includes an access point device 2, a station device 3, a second station device 4 and a third station device 5.

The communication system 1 of Fig. 1B, as shortly described above, shows a mixed approach, in which the station device 3 supports Wi-Fi 6 (IEEE 802.11ax) and the second and third station devices 4, 5 only support Wi-Fi 5.

In this mixed approach, the second and third station devices 4, 5 would still try to contend for TXOPs and thus compete with the access point device 2 trying to initiate a data transmission. This is shown in Fig. 1B based on both arrows of a respective line from the second and third station devices 4, 5 to the access point device 2 which corresponds to a respective unidirectional communication from the second and third station devices 4, 5 to the access point device 2. If one of the station devices 4, 5 wins the TXOP against the access point device 2, it can start its transmission and block the sub-channel for that amount of time. In addition, in this mixed approach, since the station device 3 supports Wi-Fi 6, it would not contend for TXOPs and thus not compete with the access point device 2. Thus, the station device 3 does not interfere the communication of the access point device 2 but rather the second and third station devices 4, 5. In addition, the line with both arrows in Fig. 1B between the access point device 2 and the station device 3 can be formed as an access point message from the access point device 2 to the station device 3 or as a station message from the station device 3 to the access point device 2.

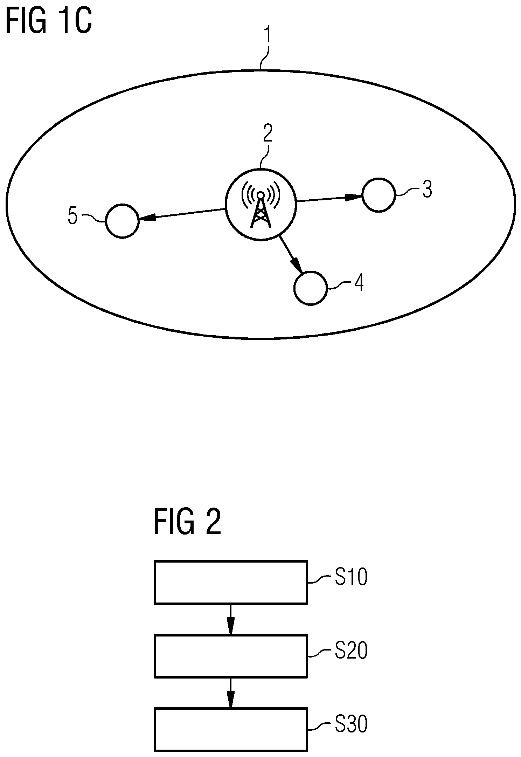

Fig. 1C shows a schematic block diagram of a communication system 1 for data transmission according to an embodiment. The communication system 1 in Fig. 1C is formed as a wireless local area network. It includes an access point device 2, a station device 3, a second station device 4 and a third station device 5.

The communication system 1 of Fig. 1C shows a Wi-Fi 6 or 802.11ax standard approach, in which the station devices 3, 4, 5 only support Wi-Fi 6 or a higher standard. In Fig. 1C, data frames transmitted between the station device 3, the second station device 4 and/or the third station device 5 and the access point device 2 are controlled by using Orthogonal Frequency-Division Multiple Access.

In Fig. 1C, the station device 3 is configured to receive a type of access point message transmitted from the access point device 2, the type of access point message including a specific flag set by the access point device 2 to a first state or to a second state and indicating a wireless standard of the access point device 2. Further, in Fig. 1C, also the second station device 4 and the third station device 5 are respectively configured to receive a type of access point message transmitted from the access point device 2 (see also method step S10 of Fig. 2).

The first state indicates that a station device 3 with a wireless standard which is lower than the wireless standard of the access point device 2 is allowed to connect to the access point device 2.

Further, the second state indicates that a station device 3 with a wireless standard which is higher or equal than a wireless standard of the access point device 2 is allowed to connect to the access point device 2. In addition, the second state indicates further that a station device 3 with a wireless standard which is lower than the wireless standard of the access point device 2 is allowed to establish a limited connection to the access point device 2 or is prohibited to connect to the access point device 2.

Then, the station device 3 is configured to verify whether the wireless standard of the station device 3 is higher or equal than the wireless standard of the access point device 2 in dependence on the type of access point message for obtaining a verification result (see also method step S20 of Fig. 2) .

If the verification result is negative and the specific flag is set to the second state, the station device 3 is configured to discontinue an execution of an action in connection with the access point device 2 (see also method step S30 of Fig. 2).

Further, if the verification result is positive and the specific flag is set to the second state, the station device 3 is configured to continue the execution of the action, wherein the execution of the action includes establishing a data connection between the station device 3 and the access point device 2 (see also method step S30 of Fig. 2). Further, if the verification result is positive and the specific flag is set to the second state, the second station device 4 and/or the third station device 5 is configured to continue the execution of the action.

In Fig. 1C, the wireless standard of the access point device 2 is IEEE 802.11ax or a higher version of the IEEE 802.11 wireless standard. Further, the wireless standard of the station devices 3, 4, 5 is also IEEE 802.11ax, IEEE 802.11be, IEEE 802.11bn or a higher standard.

In embodiments, the wireless standard of the third station device 5 is IEEE 802.11ac, IEEE 802.11n or a lower standard (not shown). In this case and if the specific flag is set to the first state, the station device 5 is allowed to connect to the access point device 2. In addition, in this case and if the specific flag is set to the second state, the station device 5 is allowed to establish a limited connection to the access point device 2 or is prohibited to connect to the access point device 2 (not shown).

In embodiments not shown, the access point device 2 is configured to receive a respective station message from each of the station devices 3, 4 and 5. Then, the access point device 2 is configured to perform a verifying for obtaining a further verification result.

Hereby, the access point device 2 is configured to receive a station message transmitted from the station device 3, the second station device 4 and/or the third station device 5, the station message including station information indicating the wireless standard of the respective station device 3, 4, 5.

Then, the access point device 2 is configured to verify whether the wireless standard of the one of the station devices, in particular the station device 3, is higher or equal than the wireless standard of the access point device 2 in dependence on the station information for obtaining a further verification result.

Afterwards, if the further verification result is negative and the specific flag is set to the second state, the access point device 2 is configured to allow the execution of a limited action or is configured to prohibit the execution of the action. The station device 3 is configured to, when performing the execution of the limited action, establish a limited connection to the access point device 2. The verifying applies equally also for the second and third station devices 4, 5.

Using the present communication system according to Fig. 1C, the channel access in the communication system 1 is improved since non-Wi-Fi 6 station devices are forbidden in the communication system 1 such that the access point device 2 can access the channel and initiate OFDMA transmissions.

Fig. 2 shows a schematic flowchart of a computer-implemented method for data transmission in a communication system 1 (see Figs. 1A, 1B and 1C) including an access point device 2 (see Figs. 1A, 1B and 1C) and a station device 3 (see Figs. 1A, 1B and 1C) according to an embodiment. The respective method steps S10 - S30 of the computer-implemented method have already been explained above in terms of Fig. 1C, which is why, in order to avoid repetitions, the method steps S10 - S30 are not explained again.

In addition, the access point message can be formed in a number of ways.

In embodiments, the type of access point message is a management frame including the specific flag.

Moreover, method step S10 further includes, prior to the receiving, the steps:
setting, by the access point device 2, the specific flag to the first state or to the second state, and
transmitting, by the access point device 2, by means of an access point message of a first type, the set specific flag to the station device 3.

Here, the access point message of a first type is a first management frame formed as a beacon frame.

In this case, the beacon frame includes header fields, in particular HE MAC Capabilities Information fields, wherein the specific flag set to the first state or to the second state is inserted into a specific field of the HE MAC Capabilities Information fields.

In addition, method step S10 further includes, prior to the receiving, the steps:
transmitting, by the station device 3, a probe request to the access point device 2,
setting, by the access point device 2, the specific flag to the first state or to the second state, and
transmitting, by the access point device 2, in response to the received probe request, a probe response to the station device 3.

Here, the probe response is an access point message of a second type formed as a second management frame.

In this case, the second management frame includes header fields, in particular EHT MAC Capabilities Information fields, wherein the specific flag set to the first state or to the second state is inserted into a specific field of the EHT MAC Capabilities Information fields.

Furthermore, method step S10 further includes, prior to the receiving, the steps:
transmitting, by the station device 3, an authentication request to the access point device 2,
setting, by the access point device 2, the specific flag to the first state or to the second state, and
transmitting, by the access point device 2, in response to the received authentication request, an authentication response to the station device 3.

Here, the authentication response is an access point message of a third type formed as a third management frame.

In this case, the third management frame includes header fields, in particular Capabilities Information fields, wherein the specific flag set to the first state or to the second state is inserted into a specific field of the Capabilities Information fields.

Moreover, method step S10 further includes, prior to the receiving, the steps:
transmitting, by the station device 3, an association request to the access point device 2,
setting, by the access point device 2, the specific flag to the first state or to the second state, and
transmitting, by the access point device 2, in response to the received association request, an association response to the station device 3.

Here, the association response is an access point message of a fourth type formed as a fourth management frame.

In this case, the fourth management frame includes header fields, in particular Capabilities Information fields, wherein the specific flag set to the first state or to the second state is inserted into a specific field of the Capabilities Information fields.

It is also possible, that the specific flag set by the access point device 2 is stored in a vendor specific information element of a storage unit of the access point device 2. Here, the access point device 2 is configured to transmit the vendor specific information element as a part of a header field of the beacon frame, the probe response, the authentication response and/or the association response to the station device 3.

Although the present invention has been described in accordance with preferred embodiments, it is obvious for the person skilled in the art that modifications are possible in all embodiments.

### Reference Numerals:

- 1: communication system
- 2: access point device
- 3: station device
- 4: second station device
- 5: third station device

- S10 - S30: method steps

### Reference list:

[1] IEEE 802.11ax-2021 standard (https://standards.ieee.org/ieee/802.11ax/7180/)

## Claims

1. Computer-implemented method for data transmission in a communication system (1), in particular a wireless local area network, including an access point device (2) and a station device (3), the method comprising:
a) receiving (S10), by the station device (3), a type of access point message transmitted from the access point device (2), the type of access point message including a specific flag set by the access point device (2) to a first state or to a second state and indicating a wireless standard of the access point device (2),
wherein the first state indicates that a station device (3) with a wireless standard which is lower than the wireless standard of the access point device (2) is allowed to connect to the access point device (2),
wherein the second state indicates that a station device (3) with a wireless standard which is higher or equal than a wireless standard of the access point device (2) is allowed to connect to the access point device (2), and the second state indicates further that a station device (3) with a wireless standard which is lower than the wireless standard of the access point device (2) is allowed to establish a limited connection to the access point device (2) or is prohibited to connect to the access point device (2),
b) verifying (S20), by the station device (3), whether the wireless standard of the station device (3) is higher or equal than the wireless standard of the access point device (2) in dependence on the type of access point message for obtaining a verification result, and
c) if the verification result is negative and the specific flag is set to the second state, discontinuing (S30), by the station device (3), an execution of an action in connection with the access point device (2).

2. The method according to claim 1,
**characterized in**
**that** the wireless standard of the access point device (2) is IEEE 802.11ax or a higher version of the IEEE 802.11 wireless standard.

3. The method according to claim 1 or 2,
**characterized in**
**that** the wireless standard of the station device (3) is IEEE 802.11n or a lower standard, IEEE 802.11ac, IEEE 802.11ax, IEEE 802.11be, IEEE 802.11bn or a higher standard.

4. The method according to one of claims 1 - 3,
**characterized in**
**that** the type of access point message is a management frame including the specific flag.

5. The method according to one of claims 1 - 4,
**characterized in**
**that** step a) (S10) further includes, prior to the receiving, the steps:
setting, by the access point device (2), the specific flag to the first state or to the second state, and
transmitting, by the access point device (2), by means of an access point message of a first type, the set specific flag to the station device (3), wherein the access point message of a first type is a first management frame formed as a beacon frame.

6. The method according to claim 5,
**characterized in**
**that** the beacon frame includes header fields, in particular HE MAC Capabilities Information fields, wherein the specific flag set to the first state or to the second state is inserted into a specific field of the HE MAC Capabilities Information fields.

7. The method according to one of claims 1 - 6, **characterized in**
**that** step a) (S10) further includes, prior to the receiving, the steps:
transmitting, by the station device (3), a probe request to the access point device (2),
setting, by the access point device (2), the specific flag to the first state or to the second state, and
transmitting, by the access point device (2), in response to the received probe request, a probe response to the station device (3), wherein the probe response is an access point message of a second type formed as a second management frame.

8. The method according to claim 7,
**characterized in**
**that** the second management frame includes header fields, in particular EHT MAC Capabilities Information fields, wherein the specific flag set to the first state or to the second state is inserted into a specific field of the EHT MAC Capabilities Information fields.

9. The method according to one of claims 1 - 8,
**characterized in**
**that** step a) (S10) further includes, prior to the receiving, the steps:
transmitting, by the station device (3), an authentication request to the access point device (2),
setting, by the access point device (2), the specific flag to the first state or to the second state, and
transmitting, by the access point device (2), in response to the received authentication request, an authentication response to the station device (3), wherein the authentication response is an access point message of a third type formed as a third management frame.

10. The method according to claim 9,
**characterized in**
**that** the third management frame includes header fields, in particular Capabilities Information fields, wherein the specific flag set to the first state or to the second state is inserted into a specific field of the Capabilities Information fields.

11. The method according to one of claims 1 - 10,
**characterized in**
**that** step a) (S10) further includes, prior to the receiving, the steps:
transmitting, by the station device (3), an association request to the access point device (2),
setting, by the access point device (2), the specific flag to the first state or to the second state, and
transmitting, by the access point device (2), in response to the received association request, an association response to the station device (3), wherein the association response is an access point message of a fourth type formed as a fourth management frame.

12. The method according to claim 11,
**characterized in**
**that** the fourth management frame includes header fields, in particular Capabilities Information fields, wherein the specific flag set to the first state or to the second state is inserted into a specific field of the Capabilities Information fields.

13. The method according to one of claims 5 - 12,
**characterized in**
**that** the specific flag set by the access point device (2) is stored in a vendor specific information element of a storage unit of the access point device (2), wherein the method further includes:
transmitting, by the access point device (2), the vendor specific information element as a part of a header field of the beacon frame, the probe response, the authentication response and/or the association response to the station device (3) .

14. The method according to one of claims 1 - 13,
**characterized in**
**that** the communication system (1) includes a second station device (4) and a third station device (5), wherein data frames transmitted between the station device (3), the second station device (4) and/or the third station device (5) and the access point device (2) are controlled by using Orthogonal Frequency-Division Multiple Access.

15. The method according to one of claims 1 - 14,
**characterized in**
**that** step c) (S30) further includes the step:
if the verification result is positive and the specific flag is set to the second state, continuing, by the station device (3), the execution of the action, wherein the execution of the action includes establishing a data connection between the station device (3) and the access point device (2) .

16. The method according to one of claims 1 - 15, **characterized by**:
receiving, by the access point device (2), a station message transmitted from the station device (3), the station message including station information indicating the wireless standard of the station device (3),
verifying, by the access point device (2), whether the wireless standard of the station device (3) is higher or equal than the wireless standard of the access point device (2) in dependence on the station information for obtaining a further verification result, and
if the further verification result is negative and the specific flag is set to the second state, allowing, by the access point device (2), the execution of a limited action, wherein the execution of the limited action includes establishing a limited connection to the access point device (2) by the station device (3), or prohibiting, by the access point device (2), the execution of the action.

17. A computer program product comprising a program code for executing the computer-implemented method according to one of claims 1 - 16 when run on at least one computer.

18. Communication system (1), in particular a wireless local area network, including an access point device (2) and a station device (3), wherein the station device (3) is configured to:
receive a type of access point message transmitted from the access point device (2), the type of access point message including a specific flag set by the access point device (2) to a first state or to a second state and indicating a wireless standard of the access point device (2),
wherein the first state indicates that a station device (3) with a wireless standard which is lower than the wireless standard of the access point device (2) is allowed to connect to the access point device (2),
wherein the second state indicates that a station device (3) with a wireless standard which is higher or equal than a wireless standard of the access point device (2) is allowed to connect to the access point device (2), and the second state indicates further that a station device (3) with a wireless standard which is lower than the wireless standard of the access point device (2) is allowed to establish a limited connection to the access point device (2) or is prohibited to connect to the access point device (2), and
verify whether the wireless standard of the station device (3) is higher or equal than the wireless standard of the access point device (2) in dependence on the type of access point message for obtaining a verification result, and
if the verification result is negative and the specific flag is set to the second state, the station device (3) is configured to discontinue an execution of an action in connection with the access point device (2).

19. The system according to claim 18,
**characterized in**
**that** the wireless standard of the access point device (2) is IEEE 802.11ax or a higher version of the IEEE 802.11 wireless standard and the wireless standard of the station device (3) is IEEE 802.11n or a lower standard, IEEE 802.11ac, IEEE 802.11ax, IEEE 802.11be, IEEE 802.11bn or a higher standard.
